# EUROPEAN PATENT SPECIFICATION

(11) **EP 1 230 196 B1**
(45) Date of publication and mention of the grant of the patent: **03.09.2003**
(21) Application number: 01940889.7
(22) Date of filing: 20.06.2001
(51) Int. Cl.: C05F 17/02

(54) **MACHINE FOR MOVEMENT OF COMPOST HEAPS**
KOMPOSTMIETENUMSETZER
MACHINE DESTINE AU MOUVEMENT DE TAS DE COMPOST

(30) Priority: 21.06.2000 IT VI20000135
(43) Date of publication of application: 14.08.2002
(73) Proprietor: Loppoli, Giuseppe, 35010 Grantorto (PD) (IT)
(72) Inventor: Loppoli, Giuseppe, 35010 Grantorto (PD) (IT)
(74) Representative: Bonini, Ercole
(86) International application number: IB0101085
(87) International publication number: WO01098234

(56) References cited:
- EP-A- 0 358 986
- EP-A- 0 615 967
- BE-A- 1 010 130
- US-A- 5 893 262

## Description

The present invention relates to a machine for handling compost heaps, during the process of bacterial fermentation to improve aeration and accelerate the fermentation process.

The production of compost from organic materials comprising both food rests and agricultural waste, such as brushwood and general greenery, has been known since sometime and notoriously is based on the natural fermentation of micro-organisms or bacteria transforming the organic materials into manure adapted for agricultural uses especially for dressing flowers or other plants.

According to some working processes, compost is heaped generally in outdoor heaps whose height varies about from 1 to 2 m, the width from 2 to 4 m and length may be over 50 m. These stockage systems show the drawback of requiring many free spaces for the necessary handling during formation and maturation of the compost. In order to handle the compost and for its required reaction there are machines provided with a bridge of such a width and height as to straddle the heap and travel along its full length with a rotor providing for handling the compost heap. This handling consists in causing the compost to rise and fall down again substantially at the same place and with the same distribution. The reaction therefore occurs in this case only during raising and lowering the material.

BE-A-1010130 discloses a machine for aerating earth consisting of a hollow structure, mounted on wheels, supporting adjacent and non-vertically mounted cutting and lifting rotors for biological purification purposes, where the earth is treated in a long heap and redeposited behind the machine.

According to another system of handling the compost heaps and as disclosed in Italian patent 01292968 in the name of the same applicant, a machine is provided with a rotor facing the entire width of the heap and attacking said heap in such a way to take the material through rotors running with screws converging to the center and transporting the material moved in a central conveyor belt relative to the longitudinal axis of the machine, that provides for moving the material from the front part to the rear part of the machine so as to rebuild the heap. This kind of handling is more efficient because the material remains in contact with air for a longer time so that oxygenation is improved.

As these compost heaps during fermentation develop bad smell, recently it was devised to carry out production of compost in closed sheds so as to avoid the harmful environmental effects. For this reason it was attempted to optimize the space first of all by heightening the compost heap up to a height of three meters and making generally parallelepipedal heaps of a width of about 20-30 m and a length up to 100 m.

The necessary handling of the heap in this case is carried out with machines having milling drums arranged vertically and attacking the heap on its entire length with subsequent passes, withdrawing the material through these milling cylinders and transferring it through a conveyor belt to the opposite working part of the milling cylinders.

The machines of this kind may have only one rotary screw or cutter or two counterrotating cylinders conveying the desiled material to the central part of the cylinders, where a conveyor belt is arranged transversally to the direction of advancement of the machine. These machines are generally towed.

Since this kind of machines carries out a lateral operation, when the working machine has covered the entire length of the heap for instance of 100 m, one is obliged to move back the machine in reverse motion without acting on the heap to return the machine on the same side and start again another pass on the heap always on the same side.

This is a rather serious drawback because operation of the machine is limited to a time that substantially can be considered almost the half of the possible operative time, in the sense that the operative time is substantially equal the repositioning time for carrying out a second pass on the heap.

Indeed this kind of machines have a rather low advancement speed in the order of 2-3 km per hour and one can understand that the time required to cover the length of the heap without handling operation, is a rather long time contributing to increase considerably the hourly cost of the heap handling operations.

The main object of the present invention is to remove the above mentioned drawbacks.

Indeed the object is to provide a machine for handling big compost heaps for instance about 3 m high, 20-30 m wide and more than 50 m long, that can be operative both in forward and return stroke without requiring idle return cycles.

The object substantially is to provide a machine that can easily work in both traveling directions so as to eliminate the repositioning dead times.

Another object is also to provide a machine that is reliable, economic and simple as to its devices so as to limit to the minimal requirement the maintenance interventions.

All the above mentioned objects and others that will be better understood hereinafter, are attained by a machine for handling compost heaps for improving the process of bacterial fermentation, comprising a support frame resting on the driving means of said machine; heap desiling means, grabbing means for the desiled material, means for moving said material to a zone closed to the heap, means for moving the machine, wherein according to the wording of the main claim, said machine is characterized in that
- said desiling means consist of a group of left hand tools and a group of right hand tools in counter rotation, provided with heap attacking means, arranged along generally vertical axes on opposite sides relative to the longitudinal axis of the machine corresponding to its advancement direction;
- said grabbing means consist of a left hand and a right hand conveyor belt, each being arranged behind each groups of tools;
- said moving means consist of a third conveyor belt arranged transversally relative to the longitudinal axis of the machine and receiving the desiled material from said left hand or right hand conveyor belt, so as to discharge the received desiled material in a zone close to the machine, parallel to the desiling zone and opposite relative to the longitudinal axis of said machine.

According to a preferred embodiment of the invention each group of tools is arranged on at least a spiral wound on the outer surface of a rotary cylinder so as to create a screw, wherein on the spiral periphery blades are arranged at generally regular intervals, said blades attacking the compost heap and effecting its desiling operation.

Advantageously according to the invention the presence of two couples of counterrotating screws, a left hand couple and a right hand couple, allows to carry out the attack of the compost material along the heap length both in the forward and return stroke, so as to limit the working dead time only to the step of reversing the motion and positioning the machine in the opposite traveling direction.

The provision of a transversal conveyor belt collecting the desiled material from one of the two conveyor belts and discharging said material once on the left side and the subsequent one on the right side relative to the machine axis, allows to juxtapose continuously the moved heaps and to recreate a compost heap generally close and almost intact relative to the original one. A further handling after the first one allows to reposition the compost material at the same position at which the handling was started.

Further characteristics and features of the invention will be better understood from the following description of a preferred embodiment of the invention given as an illustrative but non-limiting example and shown in the accompanying sheets of drawings in which:

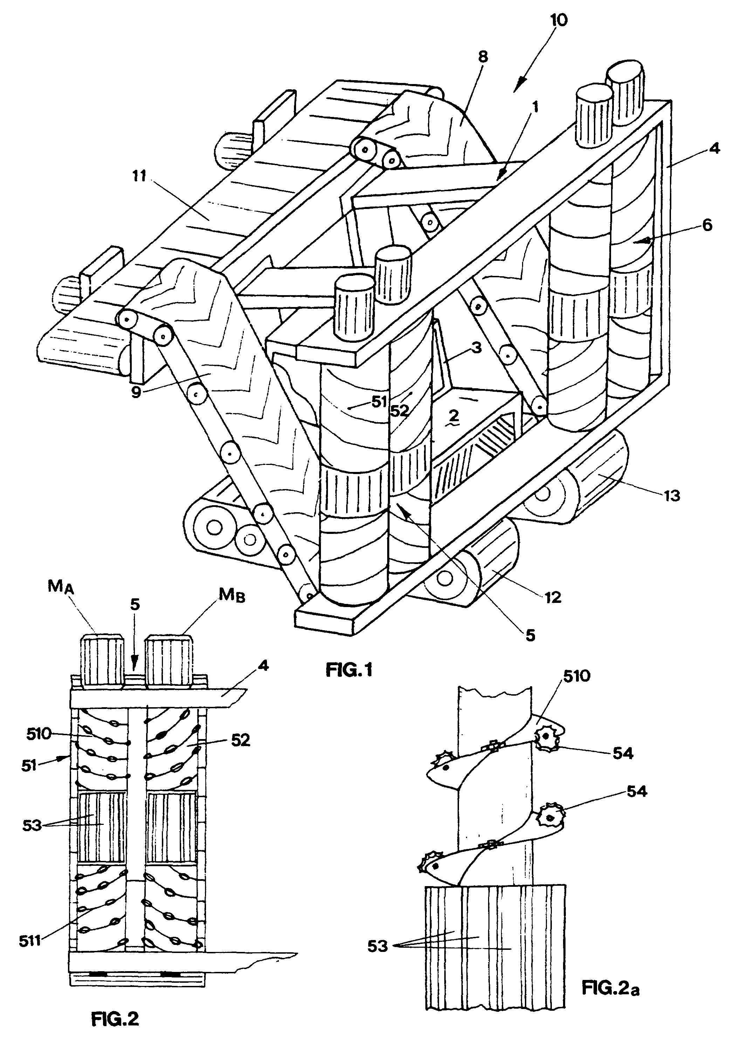

- Fig. 1 is an isometric general view of the machine of the invention;
- Fig. 2 shows details of a couple of screws for desiling the heap;
- Fig. 2a is a constructional detail of one of the screws;
- Fig. 3 is an isometric view of the machine of the invention while effecting handling of the compost heap;
- Figs. 4 and 5 show different working steps of the machine for handling the compost; and
- Figs. 6, 7 and 8 show the starting arrangement of the compost heap, the arrangement of the compost heap after a first handling operation of the machine, and the arrangement of the compost heap after a second handling operation of the heap, respectively.

With reference now to the above described figures, one can see that the compost handling machine generally indicated with reference numeral 10, has a support frame generally indicated with numeral 1, on which the endothermic engine 2 and the drive place 3 are mounted. A front frame indicated with numeral 4 is also supported by frame 1, and is adapted to support the two couples of screws, the left hand couple 5 and right hand couple 6 respectively, relative to the machine longitudinal axis coincident with its advancement direction. Two conveyor belts 8 and 9 are the grabbing means for the desiled material from each couple of screws 5 and 6, respectively. A transversal conveyor belt 11 is arranged transversally in respect of the two other belts 8 and 9 and receives the material discharged from each of the two belts 8 and 9 so as to transfer the desiled material to a heap distant at least as much as the width of the machine relative to the zone where said material is grabbed.

The machine is moved by a couple of tracks 12 and 13.

The endothermic engine 2, in addition to move the machine 10, is connected also to a hydraulic control case not shown in the drawings, which provides to deliver pressurized oil to all the hydraulic motors mounted on the working machine that will be described hereinafter.

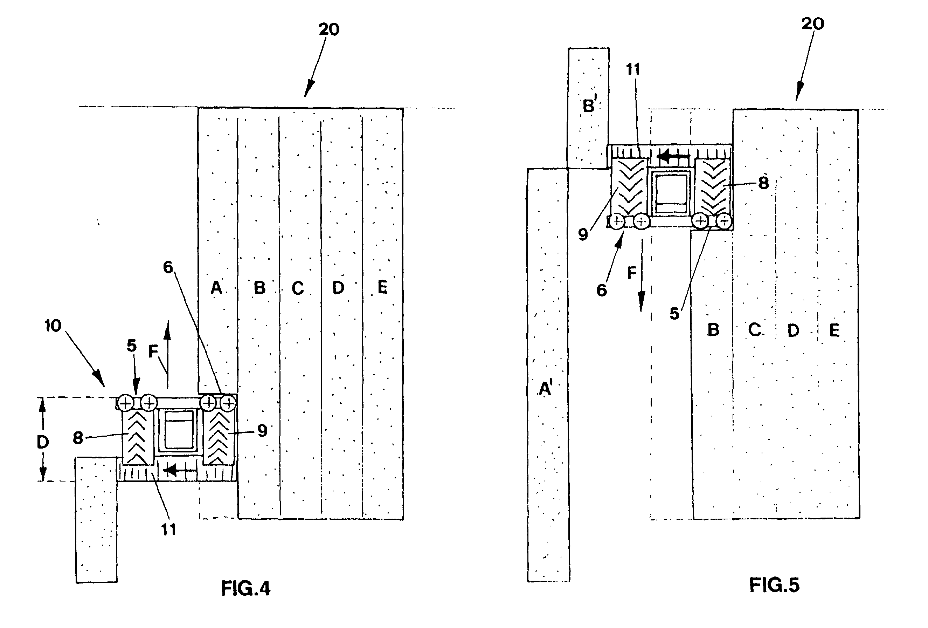

As illustrated also in Fig. 4, the main characteristic of the machine consists indeed in being able to actuate alternatively the couple of right hand or left hand screws according to the machine traveling direction relative to the heap 20.

As a matter of fact Fig. 4 shows that the heap 20 is attacked on the left side by the couple of right hand screws 6. As the couple of counterrotating screws 6 attacks portion A of the heap 20, the conveyor belt 9 arranged behind the couple of screws 6 carries the desiled material to discharge it on the transversal conveyor belt 11 generating a new heap A' on the left side of the machine as shown in Fig. 4.

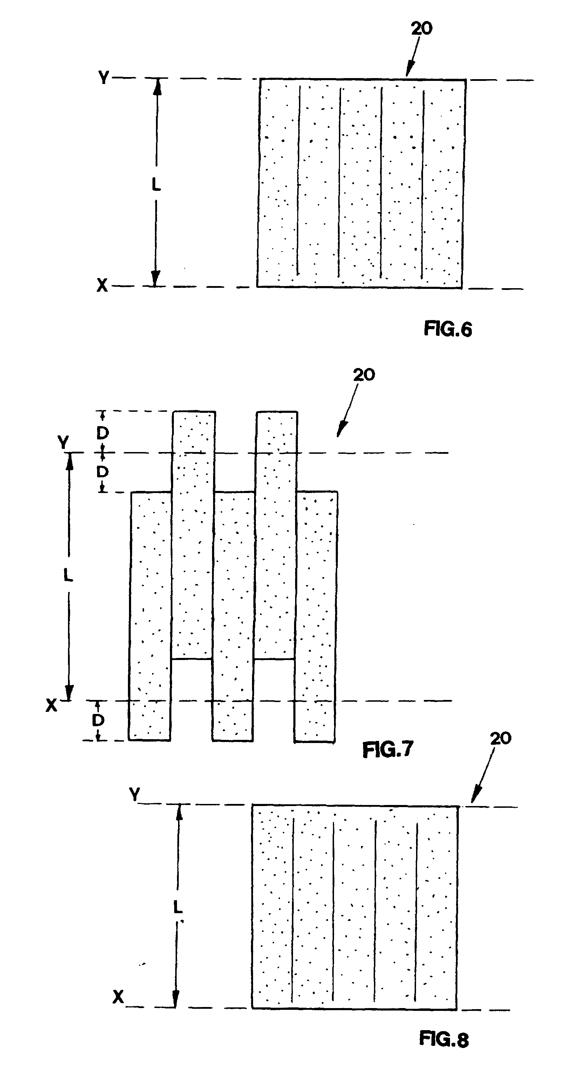

With reference to Figs. 4 and 5 if D indicates the depth size of the machine 10, one can see the heap A' which is being formed by the removal action of the portion A of the heap 20. Such a heap A' starts from a position retracted for a distance D in respect of the dimension X constituting the reference plan dimension of the compost heap start, where the distance D is equal to the machine depth. Thus with reference to Fig. 5, the entire heap A' is retracted by the same dimension D in respect of the dimension Y representing the maximum length travel of the heap when seen from the top.

Again with reference to Figs. 4 and 5 one can see that when the couple of screws 6 attacks portion A of the heap 20 proceeding in the direction of the arrow as shown in Fig. 4, once the heap A is worked on its entire length, to attack portion B of the heap 20 the machine is positioned as shown in Fig. 5 and therefore the couple of screws 5 is now moving the heap while the couple 6 remains inoperative. In this case one can see that the third conveyor belt 11 now filled by the conveyor belt 8, reverses its traveling direction so as to carry to the opposite side the desiled material and generate the heap B' as shown in Fig. 6.

When the machine effects the U turn to attack portion B of the heap 20 as shown in Fig. 5, the heap portion B' now formed is away from the reference line Y by a dimension D equal to the machine size but on the opposite side of the line Y, so that the two heaps A' and B' are actually displaced by a length dimension 2D.

To sum up it occurs therefore what is shown in Figg. 6 and 7. In other words after the first handling, the heap of Fig. 6, considered as the sum of strips of heaps A, B, C, D, E, takes the appearance of Fig. 7 where heap A is moved to A', heap B is moved to B'and so on until the heap E which is moved to E'.

The general perfect parallelepipedal configuration corresponding to Fig. 6, is recovered by a further handling carried out by the machine of the invention attacking the last moved heap, that is the heap E' so as to return it to the position E", as shown in Fig. 6 and Fig. 7 so that, when all the heaps A", B", C", D", E" will be moved from their positions of Fig. 7, the heap will be again arranged according to the starting position of Fig. 5.

It is deemed important to point out this operative aspect of the handling operation that can be carried out with the machine of the invention because the heaps of this kind are arranged in closed areas as hereinbefore mentioned. It is therefore clear that it is very important to be able to handle the heap in such a way that the heap at least after a first and a second handling operation, returns to the starting position.

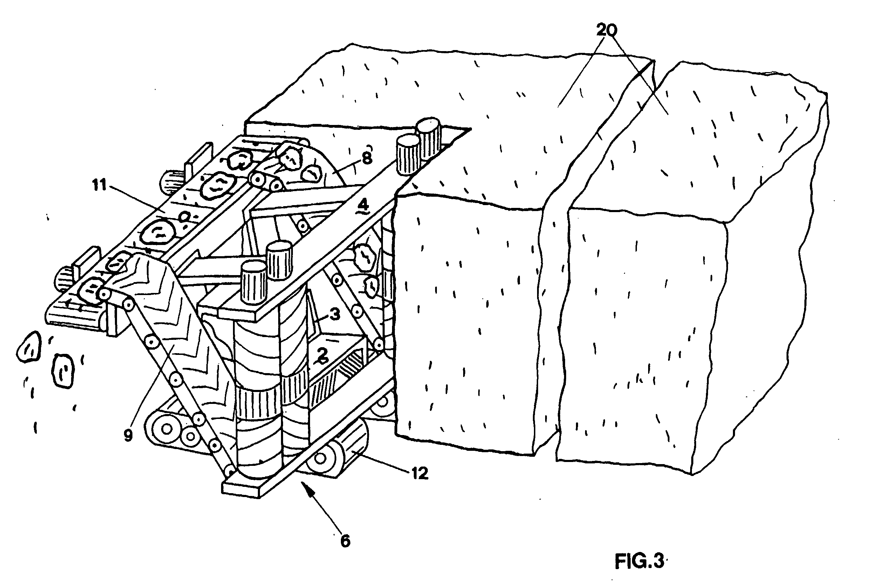

As to the structure of the screws constituting the desiling means of the invention, one can see in Fig. 2 that the couple of screws 5 consists of two counter rotating screws 5a and 5b so as to transfer the desiled material on the back conveyor belt 8.

One can also see that each screw 5a and 5b is provided with hydraulic actuating motors Ma, Mb rotating at the same speed but in the opposite direction.

Now follows a detailed description of the screw 51 and the constructional details of the screw are illustrated. All the considerations set forth below will also be equally valid for the other screws such as the screw 52 of the couple 5 and also for the screws 61 and 62 of the couple 6.

The screw 51 has two spirals 510, 511 wound on a cylinder one spiral being opposite to the other. Spiral 510 proceeds from the top to the bottom and has a greater length development than screw 511 proceeding from the bottom to the top. The two screws 510 and 511 are interrupted at a position beyond the center line to the bottom because in this point there are vanes 53 with a general longitudinal development adapted to throw the desiled material coming from the spirals 510 and 511 to the conveyor belt 8. The spirals are also provided with cutting elements such as blades, equally spaced and indicated with numeral 54, that are made both on spiral 510 and on spiral 511 and can be seen in the detail of Fig. 2a. These blades 54 have the purpose of attacking the compost material during the desiling operation by the counterrotating screws 51 and 52 that are pushed against the compost heap. As already mentioned, the desiled material from a portion of the compost heap 20 is transferred by the conveyor belt 8 to the conveyor belt 11 moving this material to the opposite side of the machine where a first heap is recreated which is then juxtaposed by a subsequent heap when the machine reverses its traveling direction and the other couple of screws is actuated.

From the description of the machine and also from the handling diagrams of the machine and of the heap portions, as shown in the Figs. of the drawings, it is clear that the machine of the invention can work indifferently in the forward and reverse stroke relative to the compost heap by the dimension Y and on the entire length L of the compost heap.

It is important to note that in the constructional stage special attention is paid to the possibility of disassembling the machine, more particularly disassembling the front support frame 4 with the screws and the transversal conveyor belt 11, so that the machine can be carried by the usual transport means without exceeding the overall dimension prescribed for the road transport vehicles.

## Claims

1. Machine for handling compost heaps to improve the process of bacterial fermentation, comprising a support frame (1) resting on driving means (12) of said machine, desiling means (5, 6) for the heap, grabbing means (8, 9) for the desiled material, means (11) to move said material to a zone close to the heap,
**characterized in that** said desiling means consist of a group of left hand tools and a group of right hand tools counterrotating to each other, provided with heap attacking means, arranged along generally vertical axes and on opposite sides relative to the machine longitudinal axis corresponding to its advancement direction;
said grabbing means consisting of a left hand and a right hand conveyor belt respectively, each being arranged behind each group of tools;
said moving means consist of a third conveyor belt (11) arranged transversally relative to the machine longitudinal axis and receiving the desiled material from said left hand or right hand conveyor belt, so as to discharge the received desiled material in a zone close to the machine, parallel to the desiling zone and opposite in respect of the machine longitudinal axis.

2. The machine according to claim 1) **characterized in that** said left hand and right hand group of tools of said machine consist of couples of counterrotating screws supported by a frame (4) resting on the machine support frame (1).

3. The machine according to claim 1) **characterized in that** said third conveyor belt (11) can be actuated in both traveling directions so that when said third belt receives the desiled material from the left hand conveyor belt, the desited material is discharged on the right side and vice versa.

4. The machine according to claim 2) **characterized in that** each screw of said couple of screws has a cylinder around which one or more spirals (510, 511) are wound and provided with blades (54) adapted to detach the material to be desiled.

5. The machine according to claim 4) **characterized in that** each screw (51) has two spirals (510, 511) wound in opposite directions, said spirals being interrupted in a zone facing the grapping conveyor belt (8) of the desiled material, vanes (53) being provided at said zone with a generally longitudinal development and adapted to throw'the desiled material collected by said spirals on said grabbing conveyor belt.

6. The machine according to claim 5) **characterized in that** the upper spiral (510) of each screw has a greater longitudinal development than the lower spiral (511), the conveyor belt (8, 9) receiving the desiled material being arranged ascending from the bottom to the top.

7. The machine according to any of the preceding claims **characterized in that** each screw has an independent motor.

8. The machine according to claim 7) **characterized in that** the motor actuating each screw is a hydraulic motor.

9. The machine according to claim 1) **characterized in that** the machine driving means consist of an endothermic engine actuating tracks (12, 13).

10. The machine according to claim 9) **characterized in that** the endothermic engine actuates also a hydraulic control case adapted to deliver pressurized oil to actuate selectively the hydraulic motor (Ma, Mb) actuating each screw and each conveyor belt (8, 9, 11).

11. The machine according to claim 1), **characterized in that** the support frame (4) for said couples of screws (5, 6) is removable from the machine main frame (1).

12. The machine according to claim 11), **characterized in that** said third conveyor belt (11) is removable from the machine main frame (1).

## Patentansprüche

1. Maschine für die Bewegung von Komposthaufen zur Verbesserung der Bakterienfermentation, einen Tragrahmen (1) auf einem Fahrwerk (12) umfassend, sowie Siloentleerungsmittel (5, 6) für den Haufen; Greifmittel (8, 9) für das aus dem Silo entnommene Material und Mittel (11) zur Förderung des Materials in einen Bereich in der Nähe des Haufens, **dadurch gekennzeichnet, dass** die Siloentleerungsmittel aus einer Gruppe linker Werkzeuge und einer Gruppe rechter Werkzeuge bestehen, welche gegeneinander drehen und mit Mitteln zur Haufenabtragung versehen sind, die entlang einer im Wesentlichen senkrechten Achse angeordnet sind und an einander entgegengesetzten Seiten bezüglich der Längsachse der Maschine, die der Vorschubrichtung entspricht;
wobei die Greifmittel jeweils aus einem linken und einem rechten Förderband bestehen, die beide jeweils hinter jeder Werkzeuggruppe angeordnet sind;
wobei das Förderungsmittel aus einem dritten Förderband (11) besteht, das quer zur Längsachse der Maschine angeordnet ist und das aus dem Silo entnommene Material über das linke oder das rechte Förderband empfängt, um dieses Material in einem Bereich in Maschinennähe zu entladen, parallel zum Siloentleerungsbereich und gegenüber der Längsachse der Maschine.

2. Die Maschine gemäß Patentanspruch 1), **dadurch gekennzeichnet, dass** die Gruppen der linken und der rechten Werkzeuge der Maschine aus Paaren gegeneinander drehender Schnecken bestehen, die durch einen Rahmen (4) getragen werden, der auf dem Tragrahmen (1) der Maschine liegt.

3. Die Maschine gemäß Patentanspruch 1), **dadurch gekennzeichnet, dass** das dritte Förderband (11) in beide Laufrichtungen angetrieben werden kann, so dass, wenn dieses dritte Band das Material vom linken Förderband erhält, das Material aus dem Silo an der rechten Seite entladen wird und umgekehrt.

4. Die Maschine gemäß Patentanspruch 2), **dadurch gekennzeichnet, dass** jede der beiden Schnecken des Schneckenpaars einen Zylinder aufweist, um den eine oder mehrere Spiralen (510, 511) gewunden und mit Schaufeln (54) versehen sind, die geeignet sind, das aus dem Silo zu entleerende Material abzulösen.

5. Die Maschine gemäß Patentanspruch 4), **dadurch gekennzeichnet, dass** jede Schnecke (51) zwei Spiralen (510, 511) aufweist, die in einander entgegengesetzte Richtungen verlaufen,
wobei die Spiralen in einem Bereich gegenüber dem Greif-Förderband (8) für das aus dem Silo entnommene Material unterbrochen sind, wobei sich in diesem Bereich im Wesentlichen längliche Lamellen (53) befinden, die geeignet sind, das aus dem Silo entnommene und mit den Spiralen aufgenommene Material auf das Greif-Förderband zu werfen.

6. Die Maschine gemäß Patentanspruch 5), **dadurch gekennzeichnet, dass** die obere Spirale (510) jeder Schnecke länger ist als die untere Spirale (511), und dass das Förderband (8, 9), welches das aus dem Silo entnommene Material aufnimmt, von unten nach oben verläuft.

7. Die Maschine gemäß jedes der vorstehenden Patenansprüche, **dadurch gekennzeichnet, dass** jede Schnecke einen unabhängigen Motor aufweist.

8. Die Maschine gemäß Patentanspruch 7), **dadurch gekennzeichnet, dass** der jede Schnecke antreibende Motor ein Hydraulikmotor ist.

9. Die Maschine gemäß Patentanspruch 1), **dadurch gekennzeichnet, dass** das Fahrwerk der Maschine aus einem endothermen Motor besteht, der Raupen (12, 13) antreibt.

10. Die Maschine gemäß Patentanspruch 9), **dadurch gekennzeichnet, dass** der endotherme Motor außerdem ein hydraulisches Steuergehäuse antreibt, das geeignet ist, unter Druck stehendes Öl für den wahlweisen Antrieb des Hydraulikmotors (Ma, Mb) für jede Schnecke und jedes Förderband (8, 9, 11) zu liefern.

11. Die Maschine gemäß Patentanspruch 1), **dadurch gekennzeichnet, dass** der Tragrahmen (4) für das Schneckenpaar (5, 6) vom Hauptrahmen (1) der Maschine abgenommen werden kann.

12. Die Maschine gemäß Patentanspruch 11), **dadurch gekennzeichnet, dass** das dritte Förderband (11) vom Hauptrahmen (1) der Maschine abgenommen werden kann.

## Revendications

1. Machine pour la manutention de tas de compost pour améliorer le processus de fermentation bactérienne, comprenant un cadre de support (1) reposant sur des moyens d'actionnement (12) de ladite machine, des moyens de désilage (5, 6) pour le tas, des moyens de préhension (8, 9) pour le matériel désilé, des moyens (11) pour déplacer ledit matériel vers une zone près du tas,
**caractérisée en ce que** lesdits moyens de désilage se composent d'un groupe d'outils de gauche et un groupe d'outils de droite contrarotatifs l'un par rapport à l'autre, munis de moyens d'arrachement du tas, positionnés le long d'un axe généralement vertical et sur des côtés opposés par rapport aux axes longitudinaux de la machine correspondant à sa direction d'avance;
lesdits moyens de préhension se composant respectivement d'une courroie transporteuse gauche et une courroie transporteuse droite, chacune étant positionnée derrière chaque groupe d'outils;
lesdits moyens de mouvement se composent d'une troisième courroie transporteuse (11) positionnée transversalement par rapport à l'axe longitudinal de la machine et recevant le matériel désilé de ladite courroie transporteuse droite ou gauche, de façon à décharger le matériel reçu désilé dans une zone près de la machine, parallèle à la zone de désilage et opposée par rapport à l'axe longitudinal de la machine.

2. La machine selon la revendication 1) **caractérisée en ce que** lesdits groupes d'outils de droite et de gauche de ladite machine se composent de couples de vis contrarotatives supportées par un cadre (4) reposant sur le cadre de support (1) de la machine.

3. La machine selon la revendication 1) **caractérisée en ce que** ladite troisième courroie transporteuse (11) peut être actionnée dans les deux directions de mouvement de façon à ce que quand ladite troisième courroie reçoit le matériel désilé de la courroie transporteuse gauche, le matériel désilé est déchargé à droite et vice versa.

4. La machine selon la revendication 2) **caractérisée en ce que** chaque vis dudit couple de vis a un cylindre autour duquel une ou plusieurs spirales (510, 511) sont enroulées et équipées de lames (54) indiquées pour détacher le matériel qui doit être désilé.

5. La machine selon la revendication 4) **caractérisée en ce que** chaque vis (51) a deux spirales (510, 511) enroulées en directions opposées, lesdites spirales étant interrompues dans une zone se trouvant en face de la courroie transporteuse de préhension (8) du matériel désilé, des lamelles (53) étant équipées dans ladite zone d'un développement généralement longitudinal et indiquées pour jeter le matériel désilé ramassé par lesdites spirales sur ladite courroie transporteuse de préhension.

6. La machine selon la revendication 5) **caractérisée en ce que** la spirale supérieure (510) de chaque vis a un développement longitudinal plus grand que celui de la spirale inférieure (511), la courroie transporteuse (8, 9) recevant le matériel désilé étant positionné d'une manière ascendante de la partie inférieure à la partie supérieure.

7. La machine selon une quelconque des revendications précédentes **caractérisée en ce que** chaque vis a un moteur indépendant.

8. La machine selon la revendication 7) **caractérisée en ce que** le moteur actionnant chaque vis est un moteur hydraulique.

9. La machine selon la revendication 1) **caractérisée en ce que** les moyens d'actionnement de la machine se composent d'un moteur endothermique actionnant des chenilles (12, 13).

10. La machine selon la revendication 9) **caractérisée en ce que** le moteur endothermique actionne également un boîtier de contrôle hydraulique indiqué pour distribuer de l'huile pressurisée pour actionner d'une manière sélective le moteur hydraulique (Ma, Mb) actionnant chaque vis et chaque courroie transporteuse (8, 9, 11).

11. La machine selon la revendication 1) **caractérisée en ce que** le cadre de support (4) pour lesdits couples de vis (5, 6) est démontable du cadre principal (1) de la machine.

12. La machine selon la revendication 11) **caractérisée en ce que** ladite troisième courroie transporteuse (11) est démontable du cadre principal (1) de la machine.
